# EUROPEAN PATENT APPLICATION

(11) **EP 4 474 348 A1**
(43) Date of publication of application: **11.12.2024**
(21) Application number: 23178243.4
(22) Date of filing: 08.06.2023
(51) Int. Cl.: C01B 32/05, C01B 13/02

(54) **METHOD AND CONVERSION APPARATUS FOR PRODUCING CARBON IN SOLID FORM FROM CO2 IN GASEOUS FORM**

(71) Applicant: Creturner Group AB, 115 26 Stockholm (SE)
(72) Inventor: MOSTRÖM, Daniel, 771 90 Ludvika (SE)
(74) Representative: Bjerkén Hynell KB

(57) **Abstract**

The invention relates to a method for producing carbon in solid form from CO₂ in gaseous form using a conversion apparatus (1) having a conversion chamber (3) accommodating a fluid mass of catalysing liquid metal (7) capable of catalysing conversion of CO₂ into oxygen gas and solid carbon, wherein the conversion chamber (3) is heated and the liquid metal (7) therein is vibrated. Gas comprising CO₂ is caused to flow through the heated conversion chamber (3) between an inlet (4) and an outlet (5) thereof while making contact with the vibrating fluid mass of catalysing liquid metal (7) in the conversion chamber to thereby cause CO₂ in the gas to convert, at an interface between the gas and the vibrating fluid mass of catalysing liquid metal, into oxygen gas and solid carbon. The invention also relates to such a conversion apparatus (1).

## Description

### FIELD OF THE INVENTION AND PRIOR ART

The present invention relates to a method for producing carbon in solid form from CO₂ in gaseous form using a conversion apparatus with a conversion chamber that accommodates one or more liquid metal pools containing a fluid mass of catalysing liquid metal capable of catalysing conversion of CO₂ into oxygen gas and solid carbon. The invention also relates to a conversion apparatus with such a conversion chamber.

In order to cope with the problem of global warming, there is an increasing need of actively removing CO₂ from the atmosphere. One possible option for removing CO₂ from the atmosphere is to capture CO₂ for storing in gaseous form or as a supercritical fluid in underground reservoirs. However, such storing is associated with technical problems as well as safety problems.

Another technique that has been suggested for removal of CO₂ from the atmosphere is based on conversion of CO₂ into solid carbon by means of catalysing liquid metal capable of catalysing conversion of CO₂ into oxygen gas and solid carbon. The solid carbon obtained in this manner is suitable for long-term storage and may easily be stored in underground reservoirs in a safe and reliable manner.

A solution for conversion of CO₂ into oxygen gas and solid carbon by means of catalysing liquid metal is previously known from WO 2021/077164 A1, which discloses a process where gas comprising CO₂ is introduced at the bottom of a vertically extending conversion chamber containing a catalyst that comprises liquid metal droplets dispersed in a solvent, wherein the CO₂ containing gas is allowed to rise as bubbles through the catalyst under the formation of oxygen gas and solid carbon at the interface between the gas and the liquid metal droplets. Another such solution is previously known from WO 2022/120411 A1, which discloses a process for producing oxygen gas and solid carbon from CO₂ via electrolysis using an electrolyte containing CO₂ and a cathode that includes liquid metal.

### OBJECT OF THE INVENTION

The object of the present invention is to provide a new and favourable method and apparatus for producing carbon in solid form from CO₂ in gaseous form by means of catalysing liquid metal capable of catalysing conversion of CO₂ into oxygen gas and solid carbon.

### SUMMARY OF THE INVENTION

According to a first aspect of the invention, said object is achieved by means of a method having the features defined in claim 1.

The method according to the present invention involves the use of a conversion apparatus having a conversion chamber that is provided with an inlet and an outlet and that accommodates one or more liquid metal pools containing a fluid mass of catalysing liquid metal capable of catalysing conversion of CO₂ into oxygen gas and solid carbon, wherein the method includes:
- heating the conversion chamber and vibrating the fluid mass of catalysing liquid metal in said one or more liquid metal pools;
- supplying gas comprising CO₂ into the heated conversion chamber through the inlet thereof and discharging gas from the heated conversion chamber through the outlet thereof such that the gas comprising CO₂ is caused to flow through the heated conversion chamber between the inlet and the outlet thereof while making contact with the vibrating fluid mass of catalysing liquid metal in said one or more liquid metal pools to thereby cause CO₂ in the gas to convert, at an interface between the gas and the vibrating fluid mass of catalysing liquid metal in said one or more liquid metal pools, into oxygen gas and solid carbon.

According to a second aspect of the invention, said object is achieved by means of a conversion apparatus having the features defined in claim 9.

The conversion apparatus according to the present invention comprises:
- a conversion chamber that is provided with an inlet and an outlet and that accommodates one or more liquid metal pools containing a fluid mass of catalysing liquid metal capable of catalysing conversion of CO₂ into oxygen gas and solid carbon;
- a heating device for heating the conversion chamber;
- one or more vibration producing actuators for vibrating the fluid mass of catalysing liquid metal in said one or more liquid metal pools, said one or more vibration producing actuators preferably being configured to subject the fluid mass of catalysing liquid metal in said one or more liquid metal pools to ultrasonic vibration; and
- gas conveying means for supplying gas comprising CO₂ into the heated conversion chamber through the inlet thereof such that the gas comprising CO₂ is caused to flow through the heated conversion chamber between the inlet and the outlet thereof while making contact with the vibrating fluid mass of catalysing liquid metal in said one or more liquid metal pools to thereby cause CO₂ in the gas to convert, at an interface between the gas and the vibrating fluid mass of catalysing liquid metal in said one or more liquid metal pools, into oxygen gas and solid carbon.

It has turned out that the heating of the conversion chamber and the vibration of the fluid mass of catalysing liquid metal in the conversion chamber promote the catalytic conversion of CO₂ into oxygen gas and solid carbon in the conversion chamber. The heat supplied to the conversion chamber creates the fundamental condition for the desired chemical reactions and the vibration of the liquid metal provides an additional supply of energy that promotes these chemical reactions. With the method and the conversion apparatus according to the present invention, CO₂ in gaseous form may be converted into oxygen gas and solid carbon in an efficient and simple manner without requiring any dispersion of the catalysing liquid metal in a solvent and without requiring any complex and electricity-consuming electrolysis apparatus.

In this description and the subsequent claims, catalysing liquid metal capable of catalysing conversion of CO₂ into oxygen gas and solid carbon refers to any metal or alloy that is liquid at a selected operating temperature of the catalytic conversion process in question and is capable of catalysing conversion of CO₂ into oxygen gas and solid carbon under the operating conditions of the process.

Said conversion in the conversion chamber is preferably performed at a temperature of 90 °C or higher, more preferably at a temperature of 90-112 °C.

According to an embodiment of the invention, said catalysing liquid metal comprises gallium and/or indium, wherein the catalysing liquid metal preferably is a eutectic gallium-indium alloy or a eutectic gallium-indium-tin alloy. However, any other suitable liquid metal may also be used.

According to another embodiment of the invention, the fluid mass of catalysing liquid metal in said one or more liquid metal pools is vibrated by being subjected to ultrasonic vibration, preferably at a frequency of 20-40 kHz. In this case, the fluid mass of catalysing liquid metal in said one or more liquid metal pools may be vibrated by means of one or more ultrasonic transducers, preferably mounted to an external wall of the conversion chamber.

According to another embodiment of the invention, the gas containing CO₂ is supplied through the inlet of the conversion chamber into a gas-filled space in the conversion chamber above an upper surface of the vibrating fluid mass of catalysing liquid metal in said one or more liquid metal pools, wherein the gas comprising CO₂ is caused to flow through the heated conversion chamber between the inlet and the outlet thereof while making contact with the upper surface of the vibrating fluid mass of catalysing liquid metal in said one or more liquid metal pools to thereby cause CO₂ in the gas to convert into oxygen gas and solid carbon at the surface of the vibrating fluid mass of catalysing liquid metal in said one or more liquid metal pools. With this embodiment, it is the surface area of the liquid metal, and not the volume thereof, that is of importance with respect to the conversion capacity of the process. Thus, a shallow liquid metal pool may be used, which reduces the required amount of liquid metal. In this case, the conversion chamber is preferably elongated and has a longitudinal axis that extends horizontally, or at least essentially horizontally, wherein said inlet is provided at a first end of the conversion chamber and said outlet is provided at an opposite second end of the conversion chamber. Hereby, the size of the conversion chamber and the effective surface area of the vibrating fluid mass of catalysing liquid metal, i.e. the area of catalysing liquid metal involved in the catalytic conversion process in the conversion chamber and thereby the conversion capacity of the process, may easily be increased by increasing the length and/or the width of the conversion chamber.

The solid carbon formed in the conversion chamber is preferably conveyed out of the conversion chamber by being carried along by the gas that is discharged from the conversion chamber through the outlet thereof. The solid carbon may then easily be collected in a collecting chamber, from which the collected solid carbon may be periodically discharged at suitable occasions.

According to another embodiment of the invention, the conversion chamber is heated by means of heat transfer fluid flowing through a channel on the outside of an external wall of the conversion chamber. Hereby, the conversion chamber may be heated in an efficient and simple manner, for instance by utilization of surplus heat from another process. The heat transfer fluid is preferably in the form of a liquid, such as for instance a suitable oil or pressurized water.

Further advantageous features of the method according to the present invention and of the conversion apparatus according to the present invention will appear from the description following below and the dependent claims.

### BRIEF DESCRIPTION OF THE DRAWINGS

With reference to the appended drawings, a specific description of embodiments of the invention cited as examples follows below. In the drawings:
- Fig 1: is a schematic illustration of a conversion apparatus according to a first embodiment of the present invention,
- Fig 2a: is a cut according to the line IIa-IIa in Fig 1,
- Fig 2b: is a cut according to the line IIb-IIb in Fig 1,
- Fig 3: is a schematic illustration of a conversion apparatus according to a second embodiment of the invention, and
- Fig 4: is a schematic illustration of a conversion apparatus according to a third embodiment of the invention.

### DETAILED DESCRIPTION OF EMBODIMENTS OF THE INVENTION

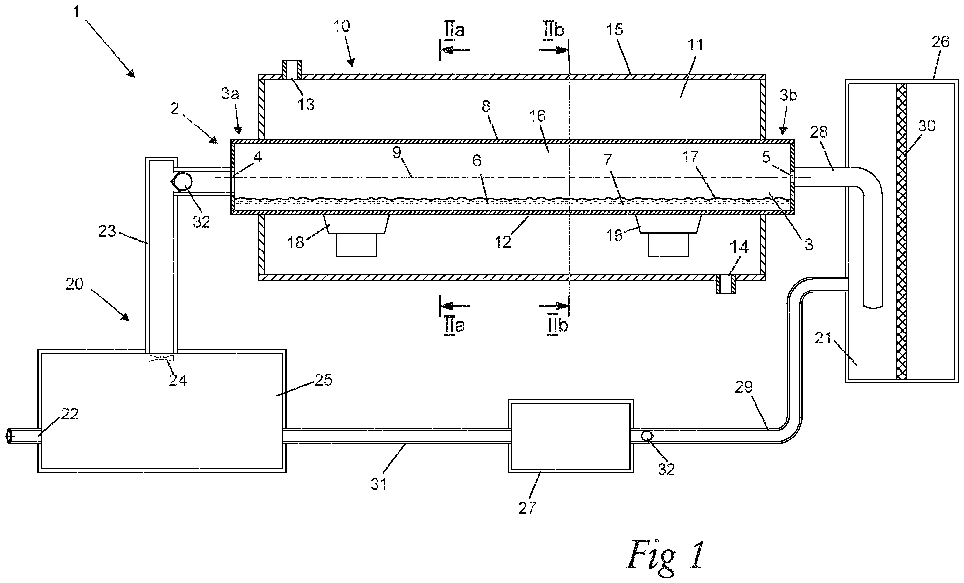

Different embodiments of a conversion apparatus 1 according to the present invention for producing carbon in solid form from CO₂ in gaseous form are schematically illustrated in Figs 1-3.

The conversion apparatus 1 according to the invention comprises a reactor 2 with a conversion chamber 3, which is provided with an inlet 4, through which gas comprising CO₂ is to be introduced into the conversion chamber 3, and an outlet 5, through which gas is to be discharged from the conversion chamber 3. The conversion chamber 3 accommodates one or more liquid metal pools 6 containing a fluid mass of catalysing liquid metal 7, i.e. a liquid metal melt, capable of catalysing conversion of CO₂ into oxygen gas and solid carbon. The gas comprising CO₂ is configured to come into contact with the liquid metal 7 in said pool 6 or pools when flowing through the conversion chamber 3 between the inlet 4 and the outlet 5 thereof. In the illustrated embodiments, the catalysing liquid metal of the reactor 2 is accommodated in one singe liquid metal pool 6 in the conversion chamber 3. However, the catalysing liquid metal of the reactor 2 may as an alternative be divided into two or more separate liquid metal pools 6 in the conversion chamber 3. The conversion apparatus 1 may also comprise a reactor 2 with two or more separate conversion chambers 3, each of which accommodating one or more liquid metal pools 6. As a further alternative, the conversion apparatus 1 may comprise two or more reactors 2, each of which having one or more conversion chambers 3 with one or more liquid metal pools 6.

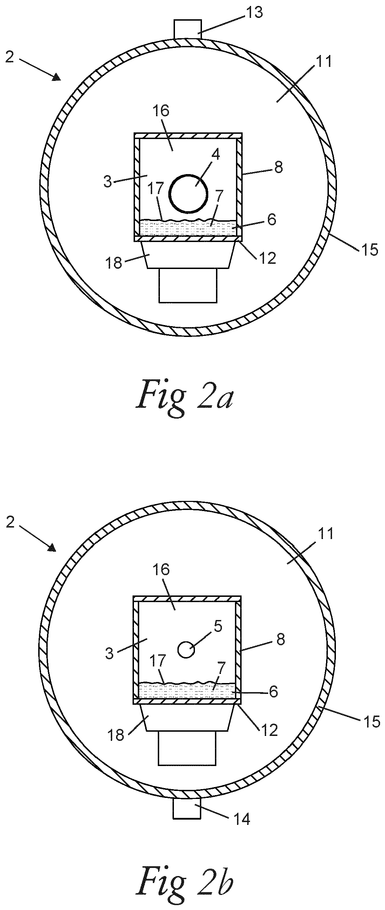

In the illustrated embodiments, the conversion chamber 3 is enclosed in an elongated casing 8, wherein the inlet 4 of the conversion chamber is located at a first end of the casing 8 and the outlet 5 of the conversion chamber is located at an opposite second end of the casing 8. The casing 8 may have a square cross-sectional shape, as illustrated in Figs 2a and 2b, or any other suitable cross-sectional shape, such as for instance rectangular, circular or oval.

Said catalysing liquid metal is with advantage a eutectic gallium-indium alloy (EGaln), or a eutectic or near-eutectic gallium-indium-tin alloy, for instance in the form of Galinstan. However, any other suitable liquid metal with an appropriate melting point may also be used, such as for instance gallium or indium, or gallium with silver, or a gallium-tin alloy, or a gallium-indium-tin alloy with nanoparticles of cerium incorporated in the alloy.

The conversion apparatus 1 comprises a heating device 10 for heating the conversion chamber 3. The heating device 10 is preferably configured to heat the conversion chamber 3 to a temperature of 90 °C or higher, and more preferably to a temperature of 90-112 °C. The heating device 10 is with advantage configured to use a circulating heat transfer fluid, preferably in the form of a liquid, for heating the conversion chamber 3. In the illustrated embodiments, the heating device 10 comprises a channel 11 provided on the outside of an external wall 12 of the conversion chamber 3, wherein the heating device 10 is configured to heat the conversion chamber 3 by means of heat transfer fluid flowing through this channel 11. The channel 11 has an inlet 13 for the heat transfer fluid at first end and an outlet 14 for the heat transfer fluid at an opposite second end. The inlet 13 of the channel 11 is preferably located at an upstream end of the conversion chamber 3 and the outlet 14 of the channel 11 is preferably located at a downstream end of the conversion chamber 3, such that the heat transfer fluid is made to flow through the channel 11 in a direction corresponding to the flow direction of the gas in the conversion chamber 3. Through the inlet 13, the channel 11 is configured to receive hot heat transfer fluid, for instance in the form of a suitable oil or pressurized water, that has been heated by any suitable heat source (not shown). The channel 11 may form part of a circuit through which the heat transfer fluid is made to circulate under the effect of a circulation pump, wherein this circuit may comprise a heat exchanger that is configured to transfer heat to the heat transfer fluid from said heat source.

In the illustrated embodiments, the channel 11 of the heating device 10 is enclosed in a tubular casing 15 with closed ends that surrounds a major part of the conversion chamber 3. Thus, in this case the channel 11 is formed by the space between the tubular casing 15 and the above-mentioned casing 8 that surrounds the conversion chamber 3.

Furthermore, the conversion apparatus 1 comprises one or more vibration producing actuators 18 for vibrating the fluid mass of catalysing liquid metal 7 in said one or more liquid metal pools 6. These vibration producing actuators 18 are with advantage configured to subject the fluid mass of catalysing liquid metal 7 to ultrasonic vibration, preferably at a frequency of 20-40 kHz. In the illustrated embodiments, each vibration producing actuator 18 has the form of an ultrasonic transducer and is mounted to an external wall 12 of the conversion chamber 3, i.e. on the outside of the above-mentioned casing 8 that surrounds the conversion chamber 3. In the illustrated embodiments, the conversion apparatus 1 is provided with two such vibration producing actuators 18. However, the number of vibration producing actuators 18 may vary in dependence on the vibration capacity of the individual actuator 18 and the size of the conversion chamber 3.

The conversion apparatus 1 also comprises gas conveying means 20 for supplying gas comprising CO₂ into the heated conversion chamber 3 through the inlet 4 thereof such that the gas is caused to flow through the conversion chamber 3 between the inlet 4 and the outlet 5 thereof while making contact with the vibrating fluid mass of catalysing liquid metal 7 in said one or more liquid metal pools 6 to thereby cause CO₂ in the gas to convert, at an interface between the gas and the vibrating fluid mass of catalysing liquid metal 7 in said one or more liquid metal pools 6, into oxygen gas and solid carbon. The solid carbon formed in the conversion chamber 3 will typically be in the form of flakes and will not adhere to the liquid metal 7. Thus, the solid carbon may be removed from the conversion chamber 3 by being carried along by the gas that is discharged from the conversion chamber 3 through the outlet 5 thereof, whereupon the solid carbon may be separated from the gas flow by filtering or by gravitational settling in a collecting chamber 21 downstream of the conversion chamber 3.

In the illustrated embodiments, gas comprising CO₂ is fed into the conversion apparatus 1 through a gas inlet 22 and conveyed from the gas inlet 22 to the inlet 4 of the conversion chamber 3 through a first conduit 23, whereupon the gas is made to flow through the conversion chamber 3 towards the outlet 5 thereof such that CO₂ in the gas is allowed to convert into oxygen gas and solid carbon at an interface between the gas and the vibrating fluid mass of catalysing liquid metal 7 in the conversion chamber 3. The gas flow from the gas inlet 22 to the inlet 4 of the conversion chamber 3 and through the conversion chamber to the outlet 5 thereof may be generated by the gas supply pressure of the gas fed into the conversion apparatus 1 through the gas inlet 22. However, the gas conveying means 20 may also comprise a flow controlling device 24 in the form of a fan, a blower or a compressor for controlling the gas flow into and through the conversion chamber 3. The solid carbon and the oxygen formed in the conversion chamber 3 flow out of the conversion chamber 3 through the outlet 5 thereof together with any CO₂ remaining in the gas after the passage through the conversion chamber 3. In the illustrated embodiments, the gas is thereafter recirculated to the conversion chamber 3 after separation of solid carbon and oxygen from the gas. Before being recirculated into the conversion chamber 3, the gas separated from solid carbon and oxygen may be mixed with new gas that is introduced into the conversion apparatus 1 through the gas inlet 22. In the illustrated embodiments, such mixing takes place in a mixing chamber 25 located between the gas inlet 22 and the inlet 4 of the conversion chamber 3, wherein this mixing chamber 25 is connected to the inlet 4 of the conversion chamber 3 through the above-mentioned first conduit 23.

The conversion apparatus 1 may comprise one or more separators 26, 27 located downstream of the conversion chamber 3 for separation of solid carbon and oxygen from the gas that is discharged from the conversion chamber 3 through the outlet 5 thereof. In the illustrated embodiments, the outlet 5 of the conversion chamber 3 is connected to a first separator 26 through a second conduit 28 and this first separator 26 is in its turn connected to a second separator 27 through a third conduit 29. In the illustrated embodiments, the first separator 26 comprises a membrane 30, for instance in the form of a perovskite hollow fibre membrane, which allows penetration of oxygen but prevents penetration of CO₂ and solid carbon. In the illustrated embodiments, this first separator 26 also comprises a collecting chamber 21, in which solid carbon is allowed to accumulate by gravitational settling. The accumulated solid carbon is discharged from the collecting chamber 21 at suitable occasions and in any suitable manner and may for instance be subjected to long-term storage in an underground reservoir or the similar or used for any desired purpose. Any oxygen remaining in the gas that leaves the first separator 26 is separated from the gas in the second separator 27 in any suitable manner. From the second separator 27, the gas flows into the mixing chamber 25 through a fourth conduit 31.

A check valve 32 is arranged in one or more of the above-mentioned conduits 23, 28, 29, 31 in order to ensure that the gas will flow in the intended flow direction through the conversion apparatus 1.

In the embodiment illustrated in Fig 1, the inlet 4 of the conversion chamber 3 opens into a gas-filled space 16 in the conversion chamber 3 above an upper surface 17 of the fluid mass of catalysing liquid metal 7 in the conversion chamber. In this case, the gas comprising CO₂ is caused to flow through the heated conversion chamber 3 between the inlet 4 and the outlet 5 thereof while making contact with the upper surface 17 of the vibrating fluid mass of catalysing liquid metal 7 in the conversion chamber 3 to thereby cause CO₂ in the gas to convert into oxygen gas and solid carbon at the surface 17 of the vibrating fluid mass of catalysing liquid metal 7 in the conversion chamber. Thus, in this embodiment, the inlet 4 and the outlet 5 of the conversion chamber 3 are located above the surface 17 of the liquid metal 7 in the conversion chamber. In this case, the conversion chamber 3 is preferably elongated and has a longitudinal axis 9 that extends horizontally, or at least essentially horizontally, wherein the inlet 4 is provided at a first end 3a of the conversion chamber 3 and the outlet 5 is provided at an opposite second end 3b of the conversion chamber.

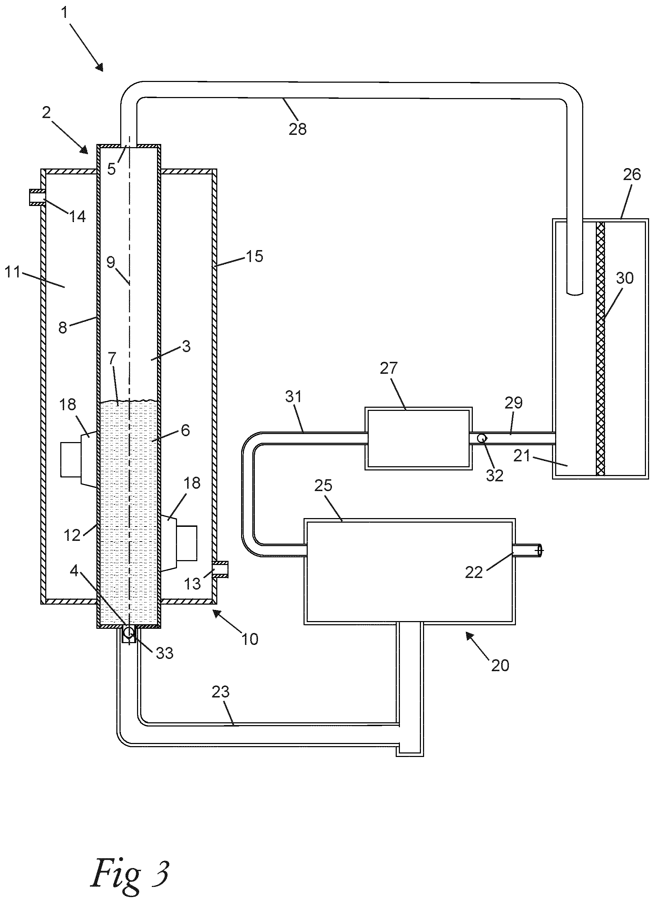

In the embodiment illustrated in Fig 3, the conversion chamber 3 has a longitudinal axis 9 that extends in vertical direction, wherein the inlet 4 is provided at the bottom of the conversion chamber 3 and the outlet 5 is provided at an upper part of the conversion chamber. The fluid mass of catalysing liquid metal 7 is located in a liquid metal pool 6 at a lower part of the conversion chamber 3. In this case, the gas containing CO₂ is introduced into the vibrating fluid mass of catalysing liquid metal 7 in the conversion chamber 3 and allowed to rise as bubbles through the liquid metal 7 to thereby cause CO₂ in the gas to convert into oxygen gas and solid carbon at the interface between the gas bubbles and the liquid metal 7. The formed particles of solid carbon will rise upwards through the liquid metal 7 to the surface thereof. A check valve 33 is arranged at the inlet 4 of the conversion chamber 3 in order to prevent liquid metal 7 from flowing out of the conversion chamber through this inlet 4.

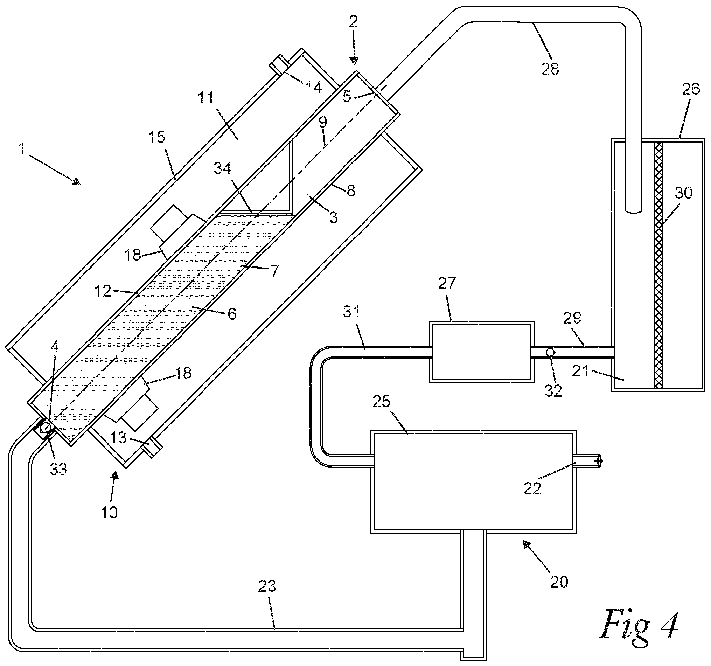

In the embodiment illustrated in Fig 4, the conversion chamber 3 has an inclined longitudinal axis 9, wherein the inlet 4 is provided at the bottom of the conversion chamber 3 and the outlet 5 is provided at an upper part of the conversion chamber. In the illustrated example, the longitudinal axis 9 of the conversion chamber 3 has an angle of inclination of 45°. However, the conversion chamber 3 may as an alternative have any other suitable inclination. The fluid mass of catalysing liquid metal 7 is located in a liquid metal pool 6 at a lower part of the conversion chamber 3. Also in this case, the gas containing CO₂ is introduced into the vibrating fluid mass of catalysing liquid metal 7 in the conversion chamber 3 and allowed to rise as bubbles through the liquid metal 7 to thereby cause CO₂ in the gas to convert into oxygen gas and solid carbon at the interface between the gas bubbles and the liquid metal 7. The formed particles of solid carbon will rise upwards through the liquid metal 7 to the surface thereof. A check valve 33 is arranged at the inlet 4 of the conversion chamber 3 in order to prevent liquid metal 7 from flowing out of the conversion chamber through this inlet 4. In the illustrated example, a horizontal barrier 34 is arranged in the conversion chamber 3 at the surface of the of the vibrating fluid mass of catalysing liquid metal 7 in the conversion chamber in order to form a throttling for the gas that leaves the liquid metal 7 and facilitate the transportation of the formed solid carbon towards the outlet 5 of the conversion chamber 3.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A method for producing carbon in solid form from CO₂ in gaseous form using a conversion apparatus (1) having a conversion chamber (3) that is provided with an inlet (4) and an outlet (5) and that accommodates one or more liquid metal pools (6) containing a fluid mass of catalysing liquid metal (7) capable of catalysing conversion of CO₂ into oxygen gas and solid carbon, the method including:
- heating the conversion chamber (3) and vibrating the fluid mass of catalysing liquid metal (7) in said one or more liquid metal pools (6);
- supplying gas comprising CO₂ into the heated conversion chamber (3) through the inlet (4) thereof and discharging gas from the heated conversion chamber (3) through the outlet (5) thereof such that the gas comprising CO₂ is caused to flow through the heated conversion chamber (3) between the inlet (4) and the outlet (5) thereof while making contact with the vibrating fluid mass of catalysing liquid metal (7) in said one or more liquid metal pools (6) to thereby cause CO₂ in the gas to convert, at an interface between the gas and the vibrating fluid mass of catalysing liquid metal (7) in said one or more liquid metal pools (6), into oxygen gas and solid carbon.

2. A method according to claim 1, wherein said conversion in the conversion chamber (3) is performed at a temperature of 90 °C or higher, preferably at a temperature of 90-112 °C.

3. A method according to claim 1 or 2, wherein said catalysing liquid metal (7) comprises gallium and/or indium, and wherein the catalysing liquid metal (7) preferably is a eutectic gallium-indium alloy or a eutectic gallium-indium-tin alloy.

4. A method according to any of claims 1-3, wherein the fluid mass of catalysing liquid metal (7) in said one or more liquid metal pools (6) is vibrated by being subjected to ultrasonic vibration, preferably at a frequency of 20-40 kHz.

5. A method according to any of claims 1-4, wherein the fluid mass of catalysing liquid metal in said one or more liquid metal pools (6) is vibrated by means of one or more vibration producing actuators (18) mounted to an external wall (12) of the conversion chamber (3).

6. A method according to any of claims 1-5, wherein the gas containing CO₂ is supplied through the inlet (4) of the conversion chamber (3) into a gas-filled space (16) in the conversion chamber (3) above an upper surface (17) of the vibrating fluid mass of catalysing liquid metal (7) in said one or more liquid metal pools (6), and wherein the gas comprising CO₂ is caused to flow through the heated conversion chamber (3) between the inlet (4) and the outlet (5) thereof while making contact with the upper surface (17) of the vibrating fluid mass of catalysing liquid metal (7) in said one or more liquid metal pools (6) to thereby cause CO₂ in the gas to convert into oxygen gas and solid carbon at the surface (17) of the vibrating fluid mass of catalysing liquid metal (7) in said one or more liquid metal pools (6).

7. A method according to claim 6, wherein the solid carbon formed in the conversion chamber (3) is conveyed out of the conversion chamber (3) by being carried along by the gas that is discharged from the conversion chamber (3) through the outlet (5) thereof.

8. A method according to any of claims 1-7, wherein the conversion chamber (3) is heated by means of heat transfer fluid flowing through a channel (11) on the outside of an external wall (12) of the conversion chamber (3).

9. A conversion apparatus for producing carbon in solid form from CO₂ in gaseous form, the conversion apparatus (1) comprising a conversion chamber (3) that is provided with an inlet (4) and an outlet (5) and that accommodates one or more liquid metal pools (6) containing a fluid mass of catalysing liquid metal (7) capable of catalysing conversion of CO₂ into oxygen gas and solid carbon, **characterized in that** the conversion apparatus (1) further comprises:
- a heating device (10) for heating the conversion chamber (3);
- one or more vibration producing actuators (18), preferably in the form of ultrasonic transducers, for vibrating the fluid mass of catalysing liquid metal (7) in said one or more liquid metal pools (6); and
- gas conveying means (20) for supplying gas comprising CO₂ into the heated conversion chamber (3) through the inlet (4) thereof such that the gas comprising CO₂ is caused to flow through the heated conversion chamber (3) between the inlet (4) and the outlet (5) thereof while making contact with the vibrating fluid mass of catalysing liquid metal (7) in said one or more liquid metal pools (6) to thereby cause CO₂ in the gas to convert, at an interface between the gas and the vibrating fluid mass of catalysing liquid metal (7) in said one or more liquid metal pools (6), into oxygen gas and solid carbon.

10. A conversion apparatus according to claim 9, **characterized in that** said catalysing liquid metal (7) comprises gallium and/or indium, and wherein the catalysing liquid metal (7) preferably is a eutectic gallium-indium alloy or a eutectic gallium-indium-tin alloy.

11. A conversion apparatus according to claim 9 or 10, **characterized in that** each one of said one or more vibration producing actuators (18) is mounted to an external wall (12) of the conversion chamber (3).

12. A conversion apparatus according to any of claims 9-11, **characterized in that** the inlet (4) of the conversion chamber (3) opens into a gas-filled space (16) in the conversion chamber (3) above an upper surface (17) of the fluid mass of catalysing liquid metal (7) in said one or more liquid metal pools (6), wherein the gas comprising CO₂ is caused to flow through the heated conversion chamber (3) between the inlet (4) and the outlet (5) thereof while making contact with the upper surface (17) of the vibrating fluid mass of catalysing liquid metal (7) in said one or more liquid metal pools (6) to thereby cause CO₂ in the gas to convert into oxygen gas and solid carbon at the surface (17) of the vibrating fluid mass of catalysing liquid metal (7) in said one or more liquid metal pools (6).

13. A conversion apparatus according to claim 12, **characterized in that** the conversion chamber (3) is elongated and has a longitudinal axis (9) that extends horizontally, or at least essentially horizontally, wherein said inlet (4) is provided at a first end (3a) of the conversion chamber (3) and said outlet (5) is provided at an opposite second end (3b) of the conversion chamber (3).

14. A conversion apparatus according to any of claims 9-13, **characterized in that** the conversion apparatus (1) comprises a collecting chamber (21) for collecting the solid carbon formed in the conversion chamber (3), wherein the outlet (5) of the conversion chamber (3) is in fluid communication with the collecting chamber (21) and wherein the solid carbon formed in the conversion chamber (3) is configured to be conveyed from the conversion chamber (3) to the collecting chamber (21) by being carried along by the gas that is discharged from the conversion chamber (3) through the outlet (5) thereof.

15. A conversion apparatus according to any of claims 9-14, **characterized in that** said heating device (10) comprises a channel (11) provided on the outside of an external wall (12) of the conversion chamber (3), wherein the heating device (10) is configured to heat the conversion chamber (3) by means of heat transfer fluid flowing through this channel (11).
